# EUROPÄISCHE PATENTSCHRIFT

(11) **EP 3 900 222 B1**
(45) Veröffentlichungstag und Bekanntmachung des Hinweises auf die Patenterteilung: **06.11.2024**
(21) Anmeldenummer: 19831729.9
(22) Anmeldetag: 20.12.2019
(51) Int. Cl.: H04B 10/112, H04B 10/118

(54) **BODENSTATION FÜR DIE ANALYSE EINES VON EINEM SATELLITEN AUSGEHENDEN OPTISCHEN DATENKOMMUNIKATIONSSTRAHLS**
GROUND STATION FOR ANALYSING AN OPTICAL DATA COMMUNICATION BEAM EMANATING FROM A SATELLITE
STATION AU SOL POUR L'ANALYSE D'UN FAISCEAU DE COMMUNICATION DE DONNÉES OPTIQUE ÉMANANT D'UN SATELLITE

(30) Priorität: 21.12.2018 DE 102018133548
(43) Veröffentlichungstag der Anmeldung: 27.10.2021
(73) Patentinhaber: Deutsches Zentrum für Luft- und Raumfahrt e.V., 51147 Köln (DE)
(72) Erfinder: GIGGENBACH, Dirk, 86932 Pürgen (DE); FUCHS, Christian, 80637 München (DE)
(74) Vertreter: dompatent von Kreisler Selting Werner - Partnerschaft von Patent- und Rechtsanwälten mbB
(86) Internationale Anmeldenummer: PCT/EP2019/086674
(87) Internationale Veröffentlichungsnummer: WO 2020/127967

(56) Entgegenhaltungen:
- EP-A2- 1 130 809
- DE-T2- 60 124 442
- US-A- 5 710 652
- US-A1- 2006 024 061
- US-A1- 2017 366 264

## Beschreibung

Die Erfindung betrifft eine Bodenstation für die Analyse eines von einem Satelliten ausgehenden optischen Datenkommunikationsstrahls, z.B. für den Empfang von Daten und/oder für die Untersuchung des Datenkommunikationsstrahls

Datendownload von Erderkundungs- und Kommunikations-Satelliten in Form von sogenannten Optical Low-Earth-Orbit Downlink (OLEODL) kann in Zukunft mittels modulierter Laserstrahlung erfolgen, über sogenannten "Freistrahl-Laserterminals". Diese Technologie wurde und wird in vielen Experimenten und Demonstrator-Missionen entwickelt und erprobt. Beispiele sind Projekte wie KIODO, LCTSX, OPALS, SOTA, OSIRIS-v1 /-v2 /-v3, OSIRIS4CubeSat, etc.

Dabei kommen als Empfangsstationen am Boden speziell modifizierte Teleskope oder eigens für diesen Zweck gebaute optische Bodenstationen (OGS) zum Einsatz. Beispiele: ESA-OGS auf Teneriffa, OGSOP (DLR-Oberpfaffenhofen), TOGS (DLR-mobil), TAOGS (DLR-Teneriffa), NICT-OGS (Tokio), CNES-OGS (Südfrankreich).

Diese optischen Bodenstationen wurden für experimentelle Zwecke entwickelt und betrieben. Bei ihrer Konzeption wurde weder auf Leichtbauweise geachtet noch Kostenaspekte (allenfalls in geringem Ausmaß) berücksichtigt, da es sich um Einzelprojekte handelt. Bisher verwendete optische Bodenstationen sind daher groß und kostspielig.

Der Aufwand zum Erstellen und Betreiben (CAPEX, OPEX) einer solchen OGS ist sehr hoch. Neben der Erstellung und Einrichtung wird für den Betrieb dieser OGS ein hohes Fachwissen benötigt, da die Autonomie der OGSen gering ist. Das Risiko von Fehlbedienung mit der Folge von Dejustage, Beschädigung, und Datenverlust ist damit derzeit relativ hoch.

Dieser hohe Einstiegspreis und -aufwand verhindert die weite Verbreitung und Etablierung der OLEODL-Technologie in preissensitiven Segmenten. Diese wären z.B. kleine kommerzielle und universitäre Einrichtungen sowie Systeme mit einer Vielzahl von Empfangsstationen wie man es von der Radio-Frequency (RF) Satellitenkommunikation kennt. Stattdessen bleibt mit dem derzeitigen erforderlichen hohen Preis- und KnowHow-Aufwand die Technologie einem kleinen Nutzerkreis vorbehalten, welcher in der Lage ist, die erforderlichen finanziellen und Personalmittel aufzubringen.

Teleskope und Bodenstationen für die optische Datenkommunikation bei professionellen Anwendungen sind z.B. in DE-T-601 24 442, EP-A-2 921 898, EP-A-2 615 748, WO-A-2018/231152, WO-A-2005/050878 und WO-A-02/095989 beschrieben.

EP-A-1 130 809 offenbart eine Bodenstation für die Analyse eines von einem Satelliten ausgehenden optischen Datenkommunikationsstrahls, wobei die Bodenstation versehen ist mit einem Teleskop und einem Anbaumodul. Das Teleskop weist ein Gestell und eine beweglich an diesem angeordnete Optikeinheit auf, die eine Vorderseite zum Empfangen von Licht und eine Rückseite zum Ausgeben eines aus dem empfangenen Licht gebildeten Teleskopstrahls aufweist, der in das Anbaumodul gelangt. Das Anbaumodul weist ein Gehäuse auf, in dem ein optischer Datenempfänger zum Empfangen des optischen Datenkommunikationsstrahls, eine Beacon-Strahlquelle zum Aussenden eines Beacon-Strahls zu einem Satelliten und einer Akquisitions- und Trackingkamera für den Empfang eines von einem Satelliten aus gesendeten Leitstrahls zum Nachführen der Optikeinheit entsprechend der Bewegungsbahn des Satelliten angeordnet sind. Längs der optischen Achse des Anbaumoduls befindet sich ein Strahlteiler zum Auskoppeln der von den einzelnen Komponenten zu empfangenen Anteile des Teleskopstrahls.

Eine ähnliche Bodenstation ist auch in US-A-2017/366264 beschrieben, wobei allerdings bei dieser bekannten Bodenstation seitlich am Teleskop ein Anbaumodul vorgesehen ist.

Druckschrift D3 beschreibt einen Laserkommunikationstransceiver für die optische Datenkommunikation.

Aus Druckschrift D4 ist eine Einrichtung für die Analyse eines optischen Datenkommunikationsstrahls bekannt, die neben einem Teleskop mit Gestell und beweglich an diesem angeordneter Optikeinheit, die ihrerseits eine Vorderseite zum Empfangen von Licht und eine Rückseite zum Ausgeben eines aus dem empfangenen Licht gebildeten Teleskopstrahls aufweist, auch einen Lichtmengen-/Lichtleistungssensor zur Erfassung der über den Querschnitt des Teleskopstrahls integrierten örtlichen Lichtintensität aufweist. Ferner umfasst die bekannte Vorrichtung auch eine Akquisitions- und Trackingkamera für den Empfang des von einer Quelle ausgehenden Datenkommunikationsstrahls zum Nachführen der Optikeinheit des Teleskops entsprechend der Bewegungsbahn der Quelle und eine Kamera zur Erfassung von potenziellen Intensitätsunterschieden des Quellensignals in Folge von atmosphärischen Störungen des Quellensignals wie z.B. Szintillationsmuster und/oder Wellenfrontverzerrungen.

Aufgabe der Erfindung ist es, eine Bodenstation für die Analyse eines von einem Satelliten ausgehenden optischen Datenkommunikationsstrahls anzugeben, die einen einfachen und damit kostengünstigen Aufbau aufweist.

Zur Lösung dieser Aufgabe wird mit der Erfindung gemäß einer ersten Variante eine Bodenstation für die Analyse eines von einem Satelliten ausgehenden optischen Datenkommunikationsstrahls vorgeschlagen, wobei die Bodenstation versehen ist mit
- einem Teleskop, das ein Gestell und eine beweglich an diesem angeordnete Optikeinheit aufweist, die eine Vorderseite zum Empfangen von Licht und eine Rückseite zum Ausgeben eines aus dem empfangenen Licht gebildeten Teleskopstrahls aufweist, und
- einem Anbaumodul zum Anbringen an der Rückseite der Optikeinheit des Teleskops, wobei der Teleskopstrahl in das Anbaumodul gelangt und eine optische Achse des Anbaumoduls definiert,
- wobei das Anbaumodul ein Gehäuse aufweist, in dem folgende Komponenten angeordnet sind:
   - eine Tageslichtkamera zum Empfangen von Licht, insbesondere von Licht von Sternen, für die Kalibrierung des Teleskops,
   - ein optischer Datenempfänger zum Empfangen des optischen Datenkommunikationsstrahls,
   - eine Beacon-Strahlquelle zum Aussenden eines Beacon-Strahls zu einem Satelliten und
   - eine Akquisition- und Trackingkamera für den Empfang eines von einem Satelliten ausgesendeten Leitstrahls zum Nachführen der Optikeinheit entsprechend der Bewegungsbahn des Satelliten,
   - wobei längs der optischen Achse des Anbaumoduls Strahlteiler zum Auskoppeln der von den einzelnen Komponenten zu empfangenden Anteile des Teleskopstrahls angeordnet sind.

Sinngemäß wird also mit der Erfindung gemäß erster Variante vorgeschlagen, an ein Standard-Teleskop, wie es beispielsweise für die Astronomie eingesetzt wird, und zwar im semiprofessionellen Bereich, ein Anbaumodul anzubringen, in dem die zuvor genannten Komponenten angeordnet sind. Mit dem Anbaumodul kann das Teleskop eingesetzt werden für die Akquisition und die Nachführung eines Satelliten, für die Kalibrierung des Teleskops und für den optischen Datenempfang. Dabei können die Akquisition und das Tracking des Satelliten anhand des Empfangs eines separaten Leitstrahls, der vom Satelliten aus zum Teleskop geschickt wird, realisiert werden; typischerweise aber wird als Information für die Akquisition und das Tracking ein (vergleichsweise geringer) Anteil des Datenkommunikationsstrahls verwendet. Das Anbaumodul weist ferner mindestens eine Beacon-Strahlquelle auf, mit der vom Teleskop aus ein "Suchstrahl" zum "Auffinden" eines Satelliten ausgesendet wird. Es ist auch möglich, mehrere derartige Beacon-Strahlen auszusenden. Auch können weitere beispielsweise Laserstrahlen, die moduliert sind, ausgesendet werden, um nämlich neben einem optischen Downlink auch einen optischen Uplink zu Datenkommunikationszwecken zu ermöglichen. Der Beacon-Strahl bzw. die Beacon-Strahlen und genauso der weitere Laserstrahl oder die weiteren Laserstrahlen sollten zweckmäßigerweise dezentral durch die Apertur des Teleskops geschickt werden, um Mittenabschattungen und Rückreflektionen zu verhindern.

Wie oben erwähnt, weist die erfindungsgemäße Bodenstation eine Tageslichtkamera auf, die in erster Linie der optischen Erfassung bestimmter Sterne dient, um durch Beobachtung der Position dieser Sterne die Ausrichtung der Bodenstation verifizieren und optimieren zu können. Der Spektralbereich, bei dem die Tageslichtkamera empfindlich ist, ist im Wesentlichen gleich demjenigen der Sonne; denn die Sterne strahlen ebenfalls in diesem Spektralbereich ab. Die Ausrichtung kann aber ebenso gut auch bspw. an Hand des vom Mond reflektierten Sonnenlicht erfolgen; das Sonnenlicht selbst ist zu hell, als das es für die Verifizierung und Optimierung der Ausrichtung der Bodenstation verwendet werden kann. Außerdem wird die Tageslichtkamera genutzt, um die Stärke des Hintergrundlichts des Himmels zu bestimmen (himmelblau), und ferner dazu genutzt festzustellen, ob sich Wolken in der Linkverbindung befinden. Und schließlich kann in bestimmten Situationen der Satellit selbst passiv beobachtet werden, also die Reflektion des Sonnenlichts auf dem Satellitenkörper. Bei der Tageslichtkamera handelt es sich im einfachsten Fall um eine bspw. siliziumhalbleiterbasierte Videokamera in z.B. Zemostechnologie.

Erfindungsgemäße Bodenstation weist darüber hinaus eine Akquisitions- und Trackingkamera auf. Diese Kamera detektiert das Laserlicht vom Satelliten (bspw. bei 1550nm) und beobachtet dessen Stabilität. Das Signal ist damit ein Punkt auf dem Kamerachip, dessen Position beobachtet wird und dessen Position der Optimierung der Ausrichtung des ganzen Teleskopaufbaus dient. Das Signal vom Satelliten wandert nämlich während des Downlinks über den Himmel, so dass das Teleskop entsprechend folgen muss. Auch bei der Akquisition- und Trackingkamera handelt es sich um eine Videokamera, die allerdings im Regelfall etwas aufwendiger ist als die Tageslichtkamera, da sie für das nahe Infrarotlicht bspw. 1550nm optimiert ist und bspw. auf InGaAs-Halbleitermaterial basiert.

In einer ersten Ausführung der erfindungsgemäßen Bodenstation sind die Komponenten in Richtung des in das Anbaumodul eintretenden Teleskopstrahls betrachtet wie folgt aufeinanderfolgend angeordnet:
- ein erster Strahlteiler zum Auskoppeln von Tageslicht sowie zum Leiten des Tageslichts in Richtung auf die Tageslichtkamera und zum Hindurchlassen des Leitstrahls und des optischen Datenkommunikationsstrahls,
- ein zweiter Strahlteiler zum Einkoppeln des Beacon-Strahls von der Seite in den Teleskopstrahl in Richtung auf die Rückseite der Optikeinheit und zum Hindurchlassen des Leitstrahls und des optischen Datenkommunikationsstrahls und
- ein dritter Strahlteiler zum Auskoppeln des optischen Datenkommunikationsstrahls sowie zum Leiten des optischen Datenkommunikationsstrahls zum optischen Datenempfänger und zum Hindurchlassen des Leitstrahls zur Akquisition- und Trackingkamera.

In zweckmäßiger Ausgestaltung der Erfindung befindet sich ein erstes optisches Filter zwischen dem zweiten Strahlteiler und dem dritten Strahlteiler und ein zweites optisches Filter zwischen dem dritten Strahlteiler und der Akquisition- und Trackingkamera.

Bei einer zweiten Ausführung der Bodenstation gemäß der ersten Erfindungsvariante sind die Komponenten in Richtung des in das Anbaumodul eintretende Teleskopstrahls betrachtet wie folgt aufeinanderfolgend angeordnet:
- ein erster Strahlteiler zum Einkoppeln des Beacon-Strahls von der Seite in den Teleskopstrahl in Richtung auf die Rückseite der Optikeinheit und zum Hindurchlassen des Leitstrahls, des Tageslichts und des optischen Datenkommunikationsstrahls,
- ein zweiter Strahlteiler zum Auskoppeln des Leitstrahls sowie zum Leiten des Leitstrahls zur Akquisition- und Trackingkamera und zum Hindurchlassen des Tageslichts und des optischen Datenkommunikationsstrahls und
- ein dritter Strahlteiler zum Auskoppeln des optischen Datenkommunikationsstrahls sowie zum Leiten des optischen Datenkommunikationsstrahls zum optischen Datenempfänger und zum Hindurchlassen des Tageslichts zur Tageslichtkamera.

Zweckmäßigerweise befindet sich bei beiden Ausführungsformen ein optisches Filter zwischen dem ersten Strahlteiler und dem zweiten Strahlteiler.

Weitere Ausgestaltungen der Erfindung sind Gegenstand der Unteransprüche 6 bis 13. Hinsichtlich der Gegenstände der Ansprüche 10 bis 13 sei gesagt, dass der Beacon-Strahl oder ein anderer für die Uplink-Datenkommunikation vorgesehener Sendestrahl kontinuierlich oder pulsmoduliert leuchtet. Hierdurch kann störendes Hintergrundlicht diskriminiert werden. Das Datenformat der Uplink-Datenkommunikation kann so gewählt sein, dass es eine Spektralkomponente bei der sonst nur vorhandenen Pulsfrequenz enthält. Die Pulse und die Datenmodulation können alternativ durch separate Beacon-Quellen erzeugt werden, um eine für den jeweiligen Zweck optimierte Divergenz einzustellen. Der Beacon-Strahl muss am Satelliten einen größeren Spot erzeugen als der Datenstrahl; damit kann dieser auch höhere Kommunikationsdatenraten nutzen.

Gemäß einer zweiten Variante der Erfindung betrifft diese eine Bodenstation für die Analyse eines von einem Satelliten ausgehenden optischen Datenkommunikationsstrahls, insbesondere für die Untersuchung der "Güte" dieses Datenkommunikationsstrahls und damit für die Untersuchung des optischen Kanals, wobei die Bodenstation versehen ist mit
- einem Teleskop, das ein Gestell und eine beweglich an diesem angeordnete Optikeinheit aufweist, die eine Vorderseite zum Empfangen von Licht und eine Rückseite zum Ausgeben eines aus dem empfangenen Licht gebildeten Teleskopstrahls aufweist, und
- einem Anbaumodul zum Anbringen an der Rückseite der Optikeinheit des Teleskops, wobei der Teleskopstrahl in das Anbaumodul gelangt und eine optische Achse des Anbaumoduls definiert,
- wobei das Anbaumodul ein Gehäuse aufweist, in dem folgende Komponenten angeordnet sind:
   - ein Lichtmengen-/Lichtleistungssensor zur Erfassung der über den Querschnitt des Teleskopstrahls integrierten örtlichen Lichtintensitäten, und/oder eine Tageslichtkamera zum Empfangen von Tageslicht, insbesondere von Licht von Sternen, für die Kalibrierung des Teleskops,
   - einer Akquisition- und Trackingkamera für den Empfang des von einem Satelliten ausgehenden Datenkommunikationsstrahls zum Nachführen der Optikeinheit des Teleskops entsprechend der Bewegungsbahn des Satelliten und
   - einer Pupillenbildkamera zur Erfassung von potenziellen Intensitätsunterschieden des Datenkommunikationsstrahls in Folge von atmosphärischen Störungen des Datenkommunikationsstrahls wie z.B. Szintillationsmuster und/oder Wellenfrontverzerrungen.

Eine Bodenstation gemäß dieser zweiten Variante der Erfindung kann zur Untersuchung der aktuellen Eigenschaften des optischen Kanals zwischen dem Satelliten und der Bodenstation verwendet werden. Wie bei der ersten Variante der Erfindung lässt sich das Anbaumodul gemäß der zweiten Variante der Erfindung auf einfache Art und Weise am Teleskop, und zwar dort, wo aus dem Teleskop der Teleskopstrahl austritt, anbringen, und zwar durch ein entsprechendes mechanisches Interface (z.B. Schraubverbindung oder Bajonettverbindung mit oder ohne Passstrifte). In dem Anbaumodul bei dieser Variante der Erfindung befindet sich ein Lichtmengen- bzw. Leistungssensor, der die aktuelle Leistungs- beziehungsweise Lichtmenge, die über den optischen Kanal transportiert wird, misst. Zusätzlich weißt das Anbaumodul eine Akquisition- und Trackingkamera auf. Auch kann dieses Modul zusätzlich eine Beacon-Strahlquelle zum Aussenden eines Beacon- bzw. "Such"-Strahls für die Erfassung eines Satelliten aufweisen. Schließlich ist Teil des Anbaumoduls auch eine sogenannte Pupillenbildkamera, die Szintillationsmuster bzw. Wellenfrontverzerrungen im Datenkommunikationsstrahl erfasst.

All die zuvor erwähnten Untersuchungen des optischen Datenkommunikationsstrahls bzw. des optischen Datenkommunikationskanals sollten grundsätzlich durchgeführt werden, um mit einem Satelliten zuverlässig optische Datenkommunikation zu betreiben. Der Vorteil der Erfindung besteht darin, dass all die erforderlichen Hardware-Komponenten, insbesondere die Hardware-Messkomponenten, in einem Anbaumodul untergebracht sind, das sich an ein handelsübliches, semiprofessionelles Teleskop, wie es beispielsweise bisher für die Astronomie eingesetzt wird, anbringen lässt. Ein derartiges "Hilfsteleskop" kann in Ergänzung zu einer aufwendigen und kostenintensiven Bodenstation aufgestellt werden, die ihrerseits beispielsweise über aufwendigere Hardware für die Datenkommunikation verfügt, als es im Zusammenhang mit der obigen ersten Variante der Erfindung beschrieben ist.

In vorteilhafter Weiterbildung der zweiten Varianten der Erfindung kann vorgesehen sein, dass die Komponenten in Richtung des in das Anbaumodul eintretenden Teleskopstrahls betrachtet wie folgt aufeinanderfolgend angeordnet sind:
- ein erster Strahlteiler zum Auskoppeln eines ersten Anteils des Datenkommunikationsstrahls oder des Tageslichts aus dem Teleskopstrahl sowie zum Leiten dieses Anteils des Datenkommunikationsstrahls bzw. zum Leiten des Tageslichts zu dem Lichtmengen/Lichtleistungssensor oder, alternativ, zu der Tageslichtkamera und zum Hindurchlassen des verbleibenden Anteils des Datenkommunikationsstrahls und
- ein zweiter Strahlteiler zum Auskoppel eines zweiten Anteils des Datenkommunikationsstrahls aus dem Teleskopstrahl sowie zum Leiten des zweiten Anteils zur Akquisition- und Trackingkamera und zum Hindurchlassen des verbleibenden Anteils des Datenkommunikationsstrahls zur Pupillenbildkamera.

Schließlich kann bei dieser zweiten Variante der Erfindung ferner mit Vorteil vorgesehen sein, dass zwischen dem ersten Strahlteiler und dem zweiten Strahlteiler ein Filter zum Filtern von Tageslicht angeordnet ist.

Ferner ist es möglich, dass in dem Anbaumodul ein weiterer Strahlteiler angeordnet ist, der aus dem Teleskopstrahl das Tageslicht auskoppelt und zur Tageslichtkamera leitet, wobei der erste Strahlteiler den ersten Anteil des Datenkommunikationsstrahls aus dem Teleskopstrahl auskoppelt und zum Lichtmengen/Lichtleistungssensor leitet. In diesem Fall befinden sich also sowohl der Sensor als auch die Tageslichtkamera im Anbaumodul.

Die Erfindung betrifft also den Aufbau einer einfachen und kostengünstigen optischen Bodenempfangseinrichtung für Analyse, also z.B. den Datenempfang oder die Untersuchung der optische Satelliten-Datenverbindungen. Die Anwendung ist primär für Telemetrie-Datendownlinks von niedrigfliegenden (LEO) Satelliten zu sehen, ist aber erweiterbar auf andere Anwendungen (höhere Erdorbits, oder aeronautische Kommunikationspartner). Der Erfindungsgedanke basiert auf der Nutzung von aktuell erhältlichen kostengünstigen semiprofessionellen Astronomieteleskopen und den dazugehörigen Mounts (elektro-mechanische Ausrichteeinheiten). Die Kommunikationsfunktionalität wird durch ein separates Anbaumodul im Fokus des Teleskops übernommen, welches durch Standardinterfaces an das Teleskop angebracht wird. Das Anbaumodul kann somit kostengünstig aufgebaut werden und - zur Unterstützung verschiedener Kommunikationsstandards (wie z.B. verschiedene Wellenlängen oder Datenraten) - relativ schnell getauscht werden. Ebenso ist ein einfacher Tausch gegen einen entsprechenden Aufbau mit kamera- und leistungsdetektor-basierten Messgeräten möglich. Das Anbaumodul integriert dabei alle erforderlichen opto-elektronischen Funktionen, nämlich Akquisitionssensor, Trackingsensor, Datenempfänger, und ggf. Beacon- und Sendepfad.

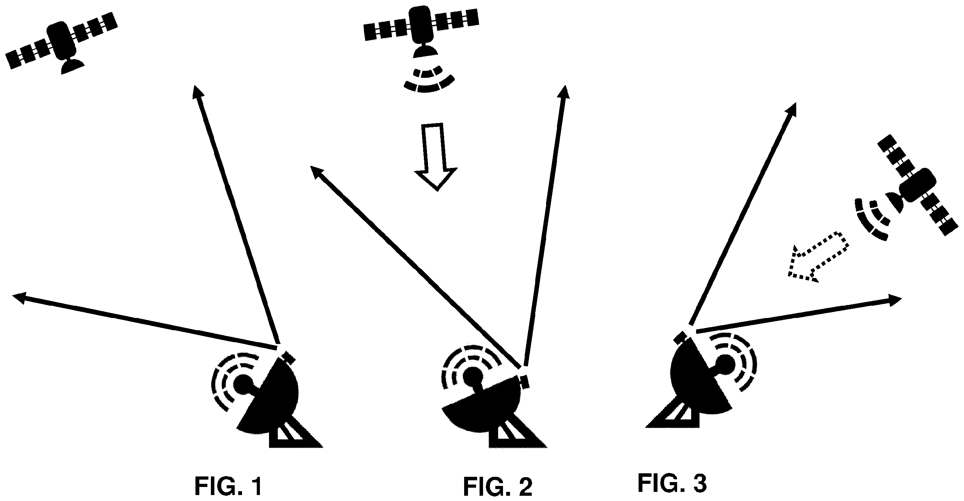

Die hier dargestellte Erfindung ermöglichen also die Verwendung aktueller semiprofessioneller Astronomie-Teleskope zusammen mit ihren Mounts (elektromechanische Ausrichteeinheit jedes Teleskops), d.h. ihren Gestellen zum Datenempfang. Diese Teleskope ermöglichen inzwischen standardmäßig das Anvisieren und Verfolgen von LEOs anhand der Eingabe von sog. TLEs oder ähnlicher Datenformate (standardisierte Satellitenorbitdaten). Präzise Winkelencoder und schnelle Direct-Drive Motoren gewährleisten eine ausreichende Pointingpräzision, um LEOs im Gesichtsfeld einer Beobachtungskamera im Fokus des Teleskops zu halten. Erforderliche Korrekturen (Pointingmodels) und Berechnungen zur präzisen Blickrichtung zum Satelliten von der Teleskop-Position aus sind dabei bereits meist schon in der Standard-Mountsteuerungssoftware enthalten. Die Fign. 1 bis 3 verdeutlichen den typischen Ablauf einer OLEODL-Downlink-Datenverbindung während des Überflugs des Satelliten über der OGS. Der Satellit wird vom Boden mit einem Beacon-Laser angestrahlt (Fig. 1), ein optischer Sensor detektiert dieses Signal vom Boden und kann damit die eigene Sendeoptik präzise auf die OGS ausrichten und den mit den Daten modulierten Laser auf die OGS abstrahlen (Fig. 2), während sich der Satellit im Sichtfeld über OGS bewegt (einige Minuten), bis die Datenverbindung nahe dem gegenüberliegenden Horizont abreißt (Fig. 3).

Diese Funktionalität moderner Teleskope bedeutet einen großen Schritt im Vergleich zu älteren Teleskopen, bei denen die Ausrichtung visuell überprüft und manuell korrigiert wird und bei denen schnelle Winkelgeschwindigkeiten - wie sie für das Verfolgen von Satelliten erforderlich sind - oft nicht möglich sind.

Die Kosten für neue schnelle semiprofessionelle Mounts liegen dabei um wenige zehntausend Euro (Beispiel PlaneWave L350), die Kosten des darauf zu montierenden Teleskops richtet sich nach der Größe (Aperturdurchmesser) und Abbildungsqualität. Für optischen Datenempfang mit IM/DD-Modulation genügt eine geringe Abbildungsqualität, womit z.B. ein einfaches Teleskop (40 bis 60 cm Aperturdurchmesser) beschafft werden kann. Weiterhin sind eine bei den Empfangswellenlängen empfindliche Kamera zum Tracken des Signals erforderlich und weitere Komponenten wie Steuerungssoftware, Beacon-Laserquelle, Datenempfänger, und Datenmodem. Die erforderliche Hardwarebasis für eine einfache OGS liegt damit einschließlich des erfindungsgemäßen teleskopfokusnahen Anbaumoduls (SOFA) deutlich unter den Anschaffungskosten heutiger OGS. Die Anschaffung von für eine weitere Autonomisierung erforderlichen Komponenten (z.B. Dom/Shelter, USV, Wettermonitoring, etc.) obliegt dann dem Engagement des jeweiligen Nutzers.

Für den Datenempfang ist dann eine zusätzliche fokusnahe optische Signalverarbeitung erforderlich, welche mit dem Mount über eine Standardschnittstelle kommuniziert, um kleine Korrekturen der Winkelausrichtung zu bewirken, sofern dies nicht schon aufgrund einer sehr guten Open-Loop Poin-tingpräzision des "of-the-shelf" mounts überflüssig ist.

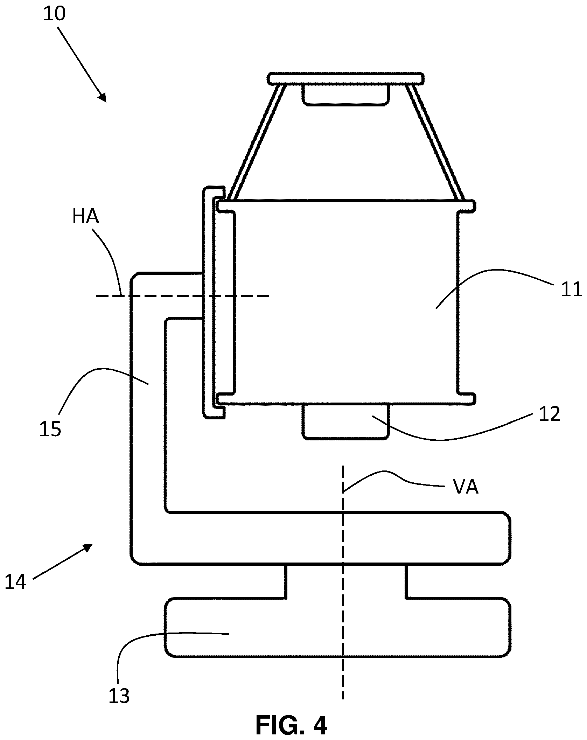

Fig. 4 zeigt den möglichen Aufbau einer Bodenstation mit einem Standardteleskop und einem im Fokus angebrachten Anbaumodul, wie es erfindungsgemäß vorgeschlagen wird. Als Beispiel für das Standardteleskop sei auf ein modernes semiprofessionelles Astronomieteleskop mit LEO-Tracking verwiesen. Mittels bekannter Bewegungsparameter (sogenannte TELs) richtet sich das Teleskop zum Satelliten aus (siehe beispielsweise das Astronomieteleskop der Firma Planewave, dargestellt unter https://www.youtube.com/watch?v=CHI-bOAKItoQ, zu sehen am 31. August 2018 auf youtube).

Hinsichtlich der Parameter des schematisch in Fig. 4 gezeigten Standardteleskops gilt, dass die Wellenlängen im System eine Kombination der optischen Wellenlängen zur Datenübertragung und der Beacon-Funktion einen sogenannten "Bandplan" ergeben, für den z.B. Folgendes gelten kann:
- Rx-Kommunikationswellenlänge ist - nach dem gerade entstehenden CCSDS-Standard - typisch um 1550 nm (1550 nm - 1562 nm, oder 1540 nm - 1560 nm - es gibt derzeit verschiedene Standardvorschläge);
- Tx (Beacon) Wellenlänge ist primär 1589 nm, zusätzliche Optionen sind Werte zwischen 1530 nm bis 1540 nm oder bei 1064 nm;
- Das "Tageslicht" (welches für die Mountkalibrierung anhand von Sternenpositionen eingesetzt werden kann) liegt zwischen 500 nm und 900 nm (--> Silizium-Kamera). Kalibrierungssequenzen sind typisch alle paar Tage bis Wochen erforderlich bzw. immer dann, wenn das Teleskop bewegt wurde.

Zur Beobachtung der Signalwellenlängen kommen beispielsweise InGaAs-basierte Kamerasensoren zum Einsatz. Diese trennen sich also vom Spektralbereich her klar vom Tageslichtbereich.

Nachfolgend werden verschiedene Vorteile und Weiterbildungen der erfindungsgemäßen Bodenstation bzw. des erfindungsgemäßen Anbaumoduls für eine Bodenstation für den Empfang eines von einem Satelliten ausgehenden optischen Datenkommunikationsstrahls einsetzbaren Standardteleskops beschrieben:
1) Kostengünstiger und robuster Aufbau einer OGS zum optischen Datenempfang von niedrigfliegenden Satelliten und entsprechend Förderung der weiteren Verbreitung dieser Kommunikationstechnologie.
2) Vermeidung von komplexen Bodenstationen, indem der Großteil der Hardware als Standardgerät angeschafft werden muss und nur die funktionell speziell für die Datenkommunikation erforderliche Komponente SOFA (Simple-OGS Focal Assembly) eigens ergänzt werden muss.
3) Einfache Austauschbarkeit der fokusnahen Komponente SOFA, um verschiedene Standards der Datenkommunikation zu unterstützen. Dies sind vor allem verschiedene Kommunikationswellenlängen, verschiedene Datenraten und Modulationsformate. Dabei bleibt die Justage von Beacon-Strahl, Trackingsignal, und Datenempfänger zueinander erhalten, sofern alle diese Komponenten als miniaturisierte verbundene Elemente gemeinsam getauscht werden.
4) Die Open-Loop-Pointingpräzision der modernen Teleskope erlaubt einen einfachen Einsatz bei Tage (ohne direkten Sichtkontakt zum Satelliten) und über kurzzeitige Linkunterbrechungen - z.B. durch Wolken - hinweg.
5) Die Beacon-Sender werden konventionell meist separat seitlich am Teleskop angebracht, um die Beacon-Funktionalität einfacher vom Empfang zu trennen. Dies hat aber zur Folge, dass diese Beacons separat auf den Empfänger justiert werden müssen, was weitere Probleme bei der Ausrichtgenauigkeit mit sich bringt; insbesondere über den gesamten Teleskopschwenkbereich verbiegt sich die Beacon-Richtung wieder, da kein "Pointingmodel" berücksichtigt werden kann zwischen Teleskopfokus und seitlich angebrachten Beacon-Optiken. Die Divergenz der Beacons ist dadurch auf einen Wert von einigen 100 prad limitiert und benötigt daher eine hohe Abstrahlleistung. Durch das Abstrahlen des Beacon-Signals über dieselbe Komponente SOFA, wie erfindungsgemäß vorgesehen, wird diese Unsicherheit vermieden, und Trackingkamera, Empfänger und Beacon-Richtung können automatisiert aufeinander abgestimmt werden. Hierzu wird z.B. ein entsprechender Justieralgorithmus verwendet, zusammen mit einem schwachen Rückstreusignal des Beacons, welches auf der Trackingkamera bei langer Belichtungszeit beobachtet werden kann. Die damit mögliche präzisere Justage des Beacons zum Empfangspfad erlaubt auch eine Reduktion der Beacon-Divergenz, womit auch eine geringere Beacon-Leistung möglich ist. Damit können hierfür einfachere Komponenten eingesetzt werden sowie die Beacon-Leistung soweit reduziert werden, so dass ein völlig augensicherer Betrieb der OGS möglich ist.
6) Möglichkeit des Einbringens mehrerer Beacon-Quellen in den Teleskopstrahlengang. Durch z.B. ein pyramidenförmiges Prisma oder eine andere Optik zur Umsetzung mehrerer aus unterschiedlichen Richtungen kommender Einzelstrahlen in eng beieinanderliegenden parallelen Einzelstrahlen lassen sich mehrere Beacon von der Seite in den Strahlengang einbringen. Es kann je nach Systemauslegung sinnvoll sein, mehrere gleichartige Beacon-Signale parallel zum Satelliten abzustrahlen, da es dadurch zur sogenannten Transmitterdiversität kommt, welche die atmosphärisch verursachten Intensitätsstörungen im Uplink verringert (siehe z.B. Giggenbach, Fuchs, Moll, Shrestha, Schmidt, "Optical on-off keying data links for low Earth orbit downlink applications" im Buch "Satellite Communications in the 5G Era", edited by Shree Krishna Sharma, Symeon Chatzinotas and Pantelis-Daniel Arapoglou, The Institution of Engineering and Technology - IET, 2018).
7) Das Kommunikationsmodul ist in sich justiert und seine Performance hängt nur von seiner Fertigungspräzision ab, nicht aber von der Justage zum Teleskop (solange das Teleskop ein genügend großes scharfes achsnahes Blickfeld bietet, was aber kein Problem darstellt, da Größen von ca. 10 mrad typisch sind für die meisten Teleskopbauformen). Damit können auch sehr günstige Teleskope mit geringer Oberflächenqualität verwendet werden, was wiederum die Kosten senkt, wobei das Teleskop selber damit nicht mehr der treibende Kostenfaktor ist.
8) Der OGS-Beacon wird vorteilhafterweise in den Strahlengang eingefügt und passiert dann idealerweise keine Linse, stattdessen nur die Spiegeloptiken des Teleskops. Damit werden Rückstreuungen in den Sensor- und Tracking-Pfad vermieden. Da das Beacon-Signal die Elemente (Teiler) für die Kameras und Datendetektor nicht passiert, wird auch hier die störende Rückstreuung minimiert.
9) Der Beacon-Uplink ist vorteilhafterweise in seiner Strahlleistung puls- oder sinusförmig moduliert mit typischerweise bis zu einigen kHz. Dadurch wird störendes (viel langsamer veränderliches) Hintergrundlicht ausgeblendet, und die Funktionalität des Links ist auch bei Tage ermöglicht.
10) Zusätzlich kann durch entsprechende Datenmodulation auf dem Beacon eine Uplink-Datenkommunikation sichergestellt werden.
11) Ferner ist es möglich, das Beacon-Signal ohne Datenmodulation einzustellen, und mit einer weiteren Laserquelle die Uplink-Datenmodulation zu bewerkstelligen. Dann werden also mehrere Uplink-Signale gleichzeitig parallel in den Strahlengang eingefügt, und zwar vorteilhafterweise sämtliche Signale vor den Empfangselementen. Dann wäre gegebenenfalls auch die Divergenz und Leistung der beiden Strahlen für ihren jeweiligen Zweck zu optimieren oder mit zwei Quellen gleicher Wellenlänge aber verschiedener Divergenz zu realisieren, um niederratige Strahlakquisition (ohne Daten-Uplink) zu trennen von Daten-Uplink in erfolgreicher Trackingphase. Die Blinkfrequenz des reinen Akquisitions-Beacon ist gegebenenfalls sehr langsam (wenige 10 Hz), im Gegensatz zu schneller Uplink-Datenmodulation (> 100k Hz bzw. > 100 kbps).
12) Die Kalibrierung der Sendestrahlrichtung zum Empfangs-Datendetektor und dessen Trackingsensor kann vorteilhaft mit einer zusätzlichen sehr schwachen Sendequelle erfolgen, welche in die Beacon-Sendefaser eingespeist wird. Diese hat dieselbe Wellenlänge wie das Empfangssignal und wird somit nicht (wie das Beacon-Signal) von den Beacon-Block-Filtern ausgeblendet, sondern ist auf dem Trackingsensor sichtbar. Dadurch kann dann vom Trackingsensor und dem Datenempfänger der Beacon-Sendestrahl gesehen und justiert werden. Im Empfangsbetrieb wird diese Kalibrierquelle ausgeschaltet, um nicht zu stören.
13) Die oben beschriebene Komponente SOFA kann in verschiedenen Bauarten für verschiedene Zwecke realisiert und dann kurzfristig ausgetauscht werden. Hierbei insbesondere interessant ist die wahlweise Integration von Messgeräten zur Signalstabilität oder zur Ermittlung des störenden Einflusses der Atmosphäre auf die Signalwellenfront (z.B. optischer Empfangsleistungssensor oder Wellenfrontsensor). Derartige Messungen können zum einen der reinen wissenschaftlichen Erkenntnis über den Einfluss der Atmosphäre dienen, oder aber auch für die weitere Signalverarbeitung beim Datenempfang eingesetzt werden (z.B. optimale soft-decision Dekodierung in der nachfolgenden Fehlerkorrektureinheit).

Das erfindungsgemäße Anbaumodul wird hinten an dem Teleskop nahe dem Fokus angebracht (mit passendem Mechanik/Optik-Interface). Entweder ist der Strahl dort durch ein entsprechendes optisches Element (Linse) zu einem Durchmesser von etwa 10 mm kollimiert (parallele Strahlen) oder das Element arbeitet mit einem konvergierenden Strahl. Letzteres würde zusätzliche reflektierende Oberflächen und chromatische Abbildungsfehler an der Kollimatorlinse vermeiden, das Element müsste dann aber auf die Fokusposition und den Konvergenzwinkel des Teleskops abgestimmt sein.

Von Vorteil bei der Erfindung ist ferner, dass die Anbaumodule austauschbar sind. Ein handelsübliches ggf. semiprofessionelles Teleskop kann also insoweit umgerüstet werden, also beispielsweise von einer optischen Datenkommunikationsempfangseinheit in eine Messeinheit und umgekehrt.

Die Erfindung wird nachfolgend anhand zweier Ausführungsbeispiele sowie unter Bezugnahme auf die Zeichnung näher erläutert. Im Einzelnen zeigen dabei:
- Fign. 1 bis 3: schematisch die Art und Weise der Akquisition und des Tracking eines Satelliten durch eine Bodenstation zur Downlink-Datenverbindung und deren Aufrechterhaltung während des Überflugs des Satelliten,
- Fig. 4: schematisch den Aufbau eines Standardteleskops mit erfindungsgemäßem Anbaumodul,
- Fig. 5: ein erstes Ausführungsbeispiel für die Anordnung der Komponenten im Anbaumodul,
- Fig. 6: ein zweites Ausführungsbeispiel für die Anordnung der Komponenten im Anbaumodul und
- Fig. 7: ein weiteres Ausführungsbeispiel für die Anordnung der Komponenten in einem Anbaumodul gemäß einer Variante der Erfindung, das zu Messzwecken eingesetzt wird.

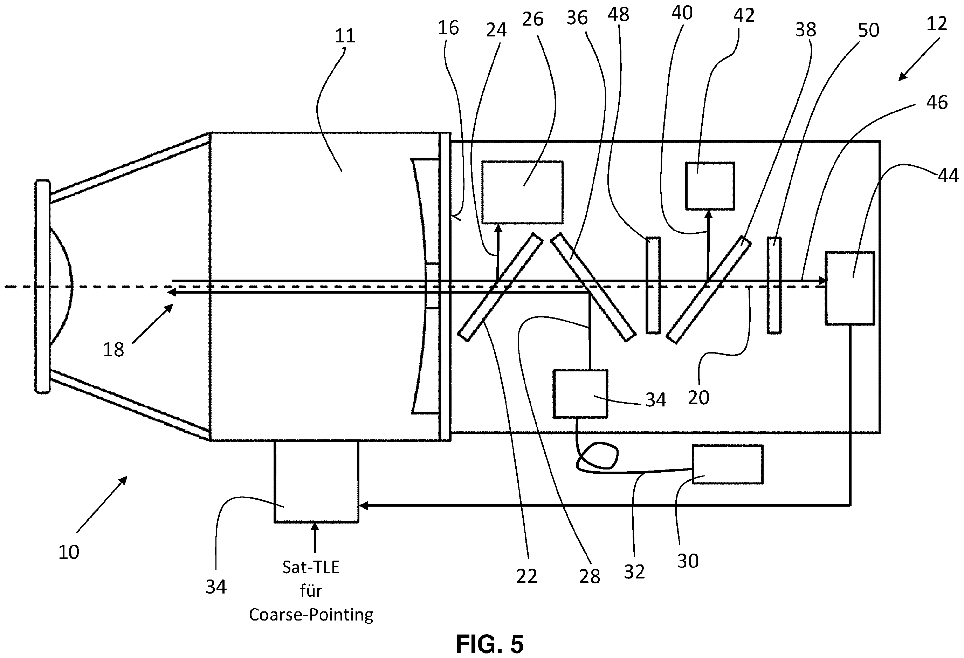

Fig. 4 zeigt schematisch den Aufbau eines Teleskops 10 mit einem Kommunikationsanbaumoduls 12 gemäß einem ersten Ausführungsbeispiel der erfindungsgemäßen Bodenstation. Das Gestell, an dem sich Optikeinheit 11 des Teleskops 10 befindet und durch das es sowohl um eine horizontale Achse 13 als auch um eine vertikale Achse 15 verschwenkbar ist siehe Fig. 4), ist in Fig. 5 bei 14 angedeutet. Zur Optikeinheit gehört typischerweise bei einem Teleskop ein oder mehrere Spiegel und ggf. Linsen und eventuell weitere optische Bauelemente.

Das Anbaumodul 12 ist beispielsweise nahe dem Fokus des Teleskops 10 an dessen Rückseite 16 angebracht. Der Teleskopstrahl 18 tritt in das Anbaumodul 12 ein und wird über verschiedene Strahlteiler geleitet. Der Teleskopstrahl 18 bildet damit die optische Achse 20 des Anbaumoduls 12.

Längs des Teleskopstrahls 18 gelangt beispielsweise Tageslicht bzw. "Sternenlicht" 24 zur Kalibrierung des Teleskops 10 in das Anbaumodul 12 hinein. Dieses Licht wird bei dem Ausführungsbeispiel gemäß Fig. 5 über einen ersten chromatischen Strahlteiler 22 ausgekoppelt und in Richtung auf eine Tageslichtkamera 26 geleitet. Im weiteren Verlauf des Teleskopstrahls 18 wird in diesen ein Beacon-Strahl 28 eingebracht. Dieser Beacon-Strahl 28 wird von einer Beacon-Quelle 30 erzeugt und gelangt über beispielsweise ein optisches Faserkabel 32 zu einer Beacon-Lichtstrahlerzeugungseinheit 34. Der Beacon-Strahl 28 trifft auf einen im Teleskopstrahl bzw. in der optischen Achse 20 angeordneten zweiten chromatischen Strahlteiler 36 und wird von diesem längs der optischen Achse 20 zum Teleskop 10 hingeleitet. Zur Vermeidung von Rückreflektionen bei z.B. einem Cassegrain-Teleskop sollte der Beacon-Strahl 28 dezentral durch die Apertur des Teleskops verlaufen. Es können mehrere (z.B. vier) Beacon-Strahlen eingespeist werden und sämtlich dezentral (in jedem Quadranten einer) durch die Apertur des Teleskops 10 verlaufen. Zusätzlich zum Beacon-Strahl kann auch noch ein weiterer Strahl für eine optische Uplink-Datenkommunikation der OGS mit einem Satelliten in den Teleskopstrahl 18 eingespeist werden (nicht gezeigt).

Über einen dritten Strahlteiler 38 wird aus dem Teleskopstrahl 18 der optische Datenkommunikationsstrahl 40 ausgekoppelt und zu einem Datenempfänger 42 geleitet. Der dritte Strahlteiler 38 teilt den Teleskopstrahl 18 in einen intensitätsstärkeren Teilstrahl (nämlich den Datenkommunikationsstrahl 40, und in einen intensitätsschwachen Teilstrahl 46 (Verhältnis z.B. 90 % : 10 %) auf.

Schließlich befindet sich in dem Anbaumodul 12 noch eine Akquisitions- und Trackingkamera 44, die den schwachen Teilstrahl 46 empfängt. Die Signale der Akquisitions- und Trackingkamera 44 werden genutzt, um die (nicht dargestellten) Antriebe des Gestells 14 des Teleskops 10 anzusteuern, um das Teleskop 10 entsprechend der Bewegung des Satelliten nachzuführen.

Zwischen dem zweiten Strahlteiler 36 und dem dritten Strahlteiler 38 befindet sich ein erstes optisches Filter 48 zum Blockieren von Tageslichtanteilen, während sich ein zweites optisches Filter 50 zwischen dem dritten Strahlteiler 38 und der Akquisitions- und Trackingkamera 44 befindet.

Bei dem teleskopfokusnah angeordneten Kommunikations- bzw. Anbaumodul 12 der Fig. 5 wird also das Tageslicht direkt hinter dem Teleskop 10 aus dem Teleskopstrahl 18 herausgeführt, und zwar mittels des ersten Strahlteilers 22, während die weiteren Strahlteiler (zweiter Strahlteiler 36 und dritter Strahlteiler 38) dafür sorgen, dass das Sende- und Empfangslicht effizient und mit ausreichender Dämpfung getrennt auf die jeweiligen Sensoren bzw. von den jeweiligen Quellen geführt wird. Der erste Strahlteiler 22 trennt das Stern- bzw. Tageslicht von den Signalwellenlängen. Der zweite chromatografische Strahlteiler 36 trennt den Beacon-Strahl bzw. den Sendestrahl der Bodenstation von den Empfangswellenlängen. Der dritte Strahlteiler 38 koppelt das Rx-Signal (Empfangssignal) zum Datenempfänger 42 aus. Darüber hinaus lässt der dritte Strahlteiler 38 das Empfangssignal zur optischen Verfolgung der Satellitenposition durch Akquisitions- und Trackingkamera 44 hindurch. Typischerweise gelangt der weitaus größte Anteil des Empfangssignals zum Datenempfänger 42, während ein nur geringer Anteil (beispielsweise 10 %) zur Akquisitions- und Trackingkamera 44 geleitet wird. Das optimale Teilungsverhältnis hängt vom jeweiligen System (Datenrate, OGS-Aperturgröße) ab. Das zweite optische Filter 50 dient der Unterdrückung von optischen Störungen durch Blendung, Reflektion o.dgl.

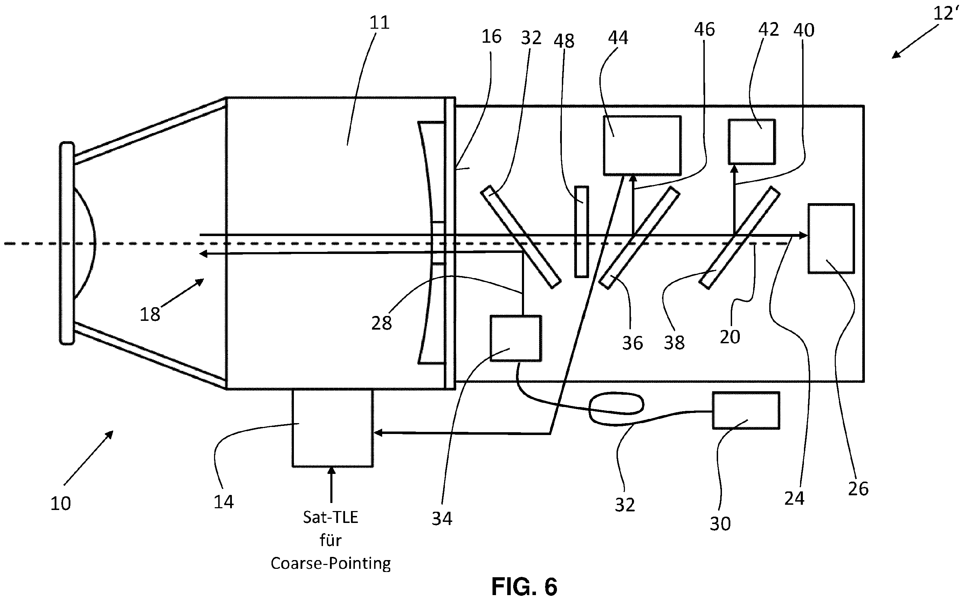

In Fig. 6 ist ein zweites Ausführungsbeispiel einer erfindungsgemäßen Bodenstation gezeigt. Soweit in Fig. 6 die einzelnen optischen Elemente hinsichtlich Konstruktion bzw. Funktion denen der Bodenstation gemäß Fig. 5 gleichen bzw. entsprechen, sind sie mit den gleichen Bezugszeichen wie in Fig. 5 versehen.

Der Aufbau des Anbaumoduls 12' der Fig. 6 unterscheidet sich hinsichtlich der Anordnung der optischen Elemente von dem Anbaumodul 12 der Fig. 12. Durch den ersten chromatischen Strahlteiler 22 wird im Anbaumodul 12' der Fig. 6 der Beacon-Strahl 28 eingekoppelt und gegenüber dem Sternen- bzw. Tageslicht 24 und dem Datenkommunikationsstrahl 40 getrennt. Der zweite Strahlteiler 36 koppelt einen geringen Anteil des optischen Datenkommunikationsstrahls 40 aus und leitet diesen zur Akquisitions- und Trackingkamera 44. Durch den dritten chromatischen Strahlteiler 38 wird der Rest des optischen Datenkommunikationsstrahls 40 ausgekoppelt und zum Datenempfänger 42 geleitet. Das Tages- bzw. Sternenlicht 24 wird zur Tageslichtkamera 26 geleitet. Von der Akquisitions- und Trackingkamera 44 gelangen deren Empfangssignale zur Steuerung der Antriebe des Gestells 14 des Teleskops 10, wie weiter oben im Zusammenhang mit dem Ausführungsbeispiel nach Fig. 5 bereits beschrieben. Auch in diesem Ausführungsbeispiel können mehrere Beacon-Strahlen und/oder mehrere Kommunikationsstrahlen für eine Uplink-Verbindung in den Teleskopstrahl eingebracht werden, wie es im Zusammenhang mit dem Ausführungsbeispiel nach Fig. 5 beschrieben ist.

Beim Ausführungsbeispiel gemäß Fig. 6 werden die jeweils relevanten Sendewellenlängen (Tx) und Empfangswellenlängen (Rx) aus dem Teleskopstrahl 18 ausgespiegelt. Übrig bleibt das restliche Licht (Tages- bzw. Sternenlicht), welches längs der gesamten optischen Achse 20 transmittiert und über die Tageslichtkamera 26 für die Gestell-Kalibrierung eingesetzt wird.

Zwischen dem ersten Strahlteiler 22 und dem zweiten Strahlteiler 36 befindet sich auf der optischen Achse 20 das erste optische Filter 48, um die Blendung der empfindlichen Akquisitions- und Trackingkamera durch den Beacon-Strahl zu verhindern. Das gegebenenfalls zurückgestreute Licht des Beacon-Strahls 28 wird insoweit vor der Akquisitions- und Trackingkamera 44 und der Tageslichtkamera 26 sowie dem Datenempfänger 42 weggefiltert (notchfilterartig).

Der erste chromatografische Strahlteiler trennt das Licht des Beacon-Strahls 28 von den Empfangswellenlängen. Der zweite Strahlteiler dient sowohl dem eigentlichen Datenempfang als auch zum optischen Verfolgen der Satellitenposition. Daher wird der Empfangssendestrahl zwischen der Akquisitions- und Trackingkamera 44 und dem Datenempfänger 42 aufgeteilt. Typischerweise gelangt dabei der größte Anteil des Lichts aus dem optischen Datenkommunikationsstrahl zum Datenempfänger 42; nur ein vergleichsweise geringer Anteil (beispielsweise 10 %) gelangt zur Akquisitions- und Trackingkamera 44, was aber für beide Funktionen ausreichend ist. Das optimale Teilungsverhältnis hängt vom jeweiligen System (Datenrate, OGS-Aperturgröße) ab.

Der dritte Strahlteiler 38 ist eventuell nicht erforderlich, sorgt aber für eine chromatische Trennung hier aber zusätzlich auch für eine gute Reflektion des Signallichts auf dem Datenempfänger 42, während das Sternen- bzw. Tageslicht zur Tageslichtkamera 26 und damit zur Gestellkalibrierung des Teleskops gelangt.

Die Ausgestaltung beider Anbaumodule gemäß den Fign. 5 und 6 haben jeweils Vor- und Nachteile bezüglich der Signaltransmission, der Übersprechdämpfung und der Abbildungsqualität auf Grund von verschiedenen optischen Elementen. Eine optimale Ausführungsform erfordert eine Qualitäts- und Kostenbewertung der Filter und der chromatografischen Strahlteiler sowie eine Rückstreuanalyse des optischen Systems. Je nach dem zu bedienenden Bandplan (Wellenlängen für die verschiedenen Tracking- und Kommunikationsaufgaben) können sich verschiedene Bauformen als vorteilhaft erweisen.

Weitere geometrische Anordnungen der Komponenten und Strahlteiler der Anbaumodule gemäß den Fign. 5 und 6 sind möglich und sollen hier nicht ausgeschlossen werden.

Eine präzise Fertigung des Moduls "SOFA" sollte z.B. durch 3D-Druck möglich sein, so dass die Ausrichtung von Beacon-Richtung zur Detektorposition dauerhaft optimal ist. Sollte aus fertigungstechnischen Gründen trotzdem eine Justagemöglichkeit erforderlich sein, so kann dies leicht durch seitliches Verschieben von Detektor oder Beacon-Quelle entlang einer planen Interfaceebene geschehen.

Falls die Rückstreuanalyse eine zu hohe Rückstreuung an planparallelen Oberflächen ergibt, so kann wie oben erwähnt anstatt des kollimierten Beacon-Sendestrahls ein konvergenter Strahl direkt von den Teleskopspiegeln - in Abhängigkeit von dem Konvergenzwinkel des Teleskops - verwendet werden.

Bezüglich des Beacon-Sendestrahls kann die Mittenabschattung im Cassegrain-Teleskop (Sekundärspiegel) dadurch vermieden werden, dass nicht ein vergleichsweise breiter Strahl zentral, sondern ein kleinerer dezentral durch die Spiegelapertur hindurchgeschickt wird, gegebenenfalls auch zwei oder mehr was dann wiederum der Sendediversität zugutekommt (siehe weiter oben).

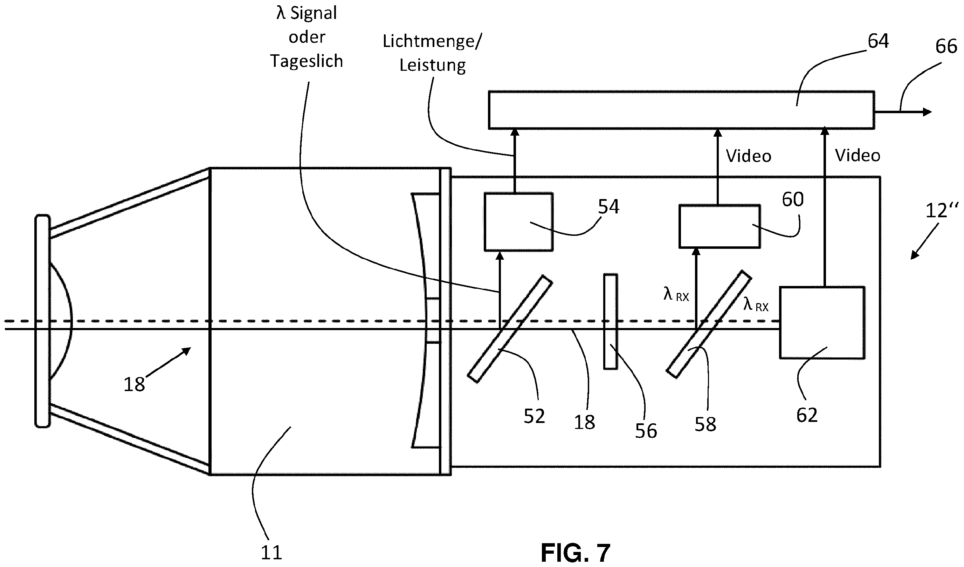

In Fig. 7 ist ein weiteres Ausführungsbeispiel der Erfindung gezeigt, wobei das Anbaumodul 12" mit gegenüber den Anbaumodulen 12 und 12' zum Teil andersartigen Komponenten versehen ist. Es sei an dieser Stelle ausdrücklich hervorgehoben, dass die Mess-Komponenten, wie sie in dem Anbaumodul 12 bzw. 12' enthalten sind, zusätzlich auch in das Anbaumodul 12" gemäß Fig. 7 eingebracht werden könnten.

Das Anbaumodul 12" gemäß Fig. 7 verleiht der Optikeinheit 11 eines handelsüblichen Teleskops die Möglichkeit, den optischen Kanal zwischen Teleskop und Satellit zu vermessen. Zu diesem Zweck weist das Anbaumodul 12" einen längs des Teleskopstrahls 18 angeordneten ersten Strahlteiler 52 auf, der aus dem Teleskopstrahl 18 einen Teil des Datenkommunikationsstrahls auskoppelt und zu einem Lichtmengen- bzw. Leistungssensor 54 leitet. Dieser Sensor integriert die Lichtintensitätsverteilung über dem Querschnitt des Teleskopstrahls 18.

Hinter dem ersten Strahlteiler 52 ist ein Filter 56 angeordnet, der eventuell in das Anbaumodul 12 längs des Teleskopstrahls 18 eindringendes Tageslicht herausfiltert.

Hinter dem Filter 56 befindet sich in dem Teleskopstrahl 18 ein zweiter Strahlteiler 58, der einen weiteren Anteil des Datenkommunikationsstrahls 18 auskoppelt und einer Akquisition- und Trackingkamera 60 zuführt.

Der verbleibende Anteil des Datenkommunikationsstrahls 18 gelangt durch den zweiten Strahlteiler 58 hindurch zu einer Pupillenbildkamera 62 (Hell-Dunkel-Kamera), die Szintillationen und/oder Wellenfrontverzerrungen des Datenkommunikationsstrahls erfasst und die entsprechenden Informationen an eine Auswerte- und Ansteuereinheit 64 weitergibt. Diese Einheit 64 empfängt auch die Daten der Akquisition- und Trackingkamera 60 sowie die Messdaten des Sensors 54, um am Ausgang 66 ein entsprechendes Signal mit all diesen Informationen abzugeben, welches für die Steuerung der Betriebsparameter einer (nicht gezeigten) optischen Bodenstation leitet, die den eigentlichen Datenempfang vom Satelliten übernimmt.

Bei dem Teleskop mit dem Anbaumodul 12" der Fig. 7 handelt es sich also um eine Hilfs- bzw. Messeinrichtung zur Unterstützung des Betriebs der Bodenstation, die ebenfalls mit demselben Satelliten wie das Teleskop gemäß Fig. 7 in Verbindung steht und die Datenkommunikation auswertet bzw. verarbeitet.

Beispiele für gewerbliche Anwendungen der Erfindung sind
- der optische Datenempfang von Satelliten, insbesondere Daten-Downlinks von niedrigfliegenden (LEO) Satelliten,
- die weitere Kommunikation mit Satelliten in diversen Erdorbits oder darüber hinaus,
- der optische Datenempfang von Flugzeugen und anderen mobilen Trägern (in Luft, Wasser, Land).

### BEZUGSZEICHENLISTE

- 10: Teleskop
- 11: Optikeinheit des Teleskops
- 12: Kommunikations-Anbaumodul
- 12': Anbaumodul
- 13: horizontale Achse
- 14: Gestell
- 15: vertikale Achse
- 16: Rückseite des Teleskops
- 18: Teleskopstrahl
- 20: optische Achse
- 22: erste Strahlteiler
- 24: Tageslicht, Sternenlicht
- 26: Tageslichtkamera
- 28: Beacon-Strahl
- 30: Beacon-Quelle
- 32: Faserkabel
- 34: Beacon-Lichtstrahlerzeugungseinheit
- 36: zweiten Strahlteiler
- 38: dritte Strahlteiler
- 40: Datenkommunikationsstrahl
- 42: Datenempfänger
- 44: Akquisition- und Trackingkamera
- 46: Leitstrahl
- 48: erstes optisches Filter
- 50: zweites optisches Filter
- 52: erster Strahlteiler
- 54: Lichtmengen/Lichtleistungssensor
- 56: Filter
- 58: zweiter Strahlteiler
- 60: Akquisition- und Trackingkamera
- 62: Pupillenbildkamera
- 64: Auswerte- und Ansteuereinheit
- 66: Ausgang der Auswerte- und Ansteuereinheit

### ABKÜRZUNGSLISTE

- LEO: Low-Earth Orbit
- OGS: optische Bodenstation (Optical Ground Station)
- OLEODL: Optical Low-Earth-Orbit Downlink
- SOFA: Simple-OGS Focal Assembly

## Patentansprüche

1. Bodenstation für die Analyse eines von einem Satelliten ausgehenden optischen Datenkommunikationsstrahls, mit
- einem Teleskop (10), das ein Gestell (14) und eine beweglich an diesem angeordnete Optikeinheit (11) aufweist, die eine Vorderseite zum Empfangen von Licht und eine Rückseite (16) zum Ausgeben eines aus dem empfangenen Licht gebildeten Teleskopstrahls (18) aufweist, und
- einem Anbaumodul (12) zum Anbringen an der Rückseite (18) der Optikeinheit (11) des Teleskops (10), wobei der Teleskopstrahl (18) in das Anbaumodul (12) gelangt und eine optische Achse (20) des Anbaumoduls (12) definiert,
- wobei das Anbaumodul (12) ein Gehäuse aufweist, in dem folgende Komponenten angeordnet sind:
- eine Tageslichtkamera (26) zum Empfangen von Licht, insbesondere von Licht von Sternen, für die Kalibrierung des Teleskops (10),
- ein optischer Datenempfänger (42) zum Empfangen des optischen Datenkommunikationsstrahls (40),
- eine Beacon-Strahlquelle (30) zum Aussenden eines Beacon-Strahls (28) zu einem Satelliten und
- eine Akquisition- und Trackingkamera (44) für den Empfang eines von einem Satelliten ausgesendeten Leitstrahls zum Nachführen der Optikeinheit (11) entsprechend der Bewegungsbahn des Satelliten,
- wobei längs der optischen Achse (20) des Anbaumoduls (12) Strahlteiler (22, 36, 38) zum Auskoppeln der von den einzelnen Komponenten zu empfangenden Anteile des Teleskopstrahls (18) angeordnet sind.

2. Bodenstation nach Anspruch 1, **dadurch gekennzeichnet, dass** die Tageslichtkamera Licht von Sternen empfängt.

3. Bodenstation nach Anspruch 1 oder 2, **dadurch gekennzeichnet, dass** die Komponenten in Richtung des in das Anbaumodul (12) eintretenden Teleskopstrahls (18) betrachtet wie folgt aufeinanderfolgend angeordnet sind:
- ein erster Strahlteiler (22) zum Auskoppeln von Tageslicht sowie zum Leiten des Tageslichts in Richtung auf die Tageslichtkamera (26) und zum Hindurchlassen des Leitstrahls und des optischen Datenkommunikationsstrahls (40),
- ein zweiter Strahlteiler (36) zum Einkoppeln des Beacon-Strahls (28) von der Seite in den Teleskopstrahl (18) in Richtung auf die Rückseite (16) der Optikeinheit (11) und zum Hindurchlassen des Leitstrahls und des optischen Datenkommunikationsstrahls (40) und
- ein dritter Strahlteiler (38) zum Auskoppeln des optischen Datenkommunikationsstrahls (40) sowie zum Leiten des optischen Datenkommunikationsstrahls (40) zum optischen Datenempfänger (42) und zum Hindurchlassen des Leitstrahls zur Akquisition- und Trackingkamera (44).

4. Bodenstation nach Anspruch 3, **gekennzeichnet durch** ein erstes optisches Filter (48) zwischen dem zweiten Strahlteiler (36) und dem dritten Strahlteiler (38) und ein zweites optisches Filter (50) zwischen dem dritten Strahlteiler (38) und der Akquisition- und Trackingkamera (44).

5. Bodenstation nach Anspruch 1 oder 2, **dadurch gekennzeichnet, dass** die Komponenten in Richtung des in das Anbaumodul (12) eintretende Teleskopstrahls (18) betrachtet wie folgt aufeinanderfolgend angeordnet sind:
- ein erster Strahlteiler (22) zum Einkoppeln des Beacon-Strahls (28) von der Seite in den Teleskopstrahl (18) in Richtung auf die Rückseite (16) der Optikeinheit (11) und zum Hindurchlassen des Leitstrahls, des Tageslichts (24) und des optischen Datenkommunikationsstrahls (40),
- ein zweiter Strahlteiler (36) zum Auskoppeln des Leitstrahls sowie zum Leiten des Leitstrahls zur Akquisition- und Trackingkamera (44) und zum Hindurchlassen des Tageslichts (24) und des optischen Datenkommunikationsstrahls (40) und
- ein dritter Strahlteiler (38) zum Auskoppeln des optischen Datenkommunikationsstrahls (40) sowie zum Leiten des optischen Datenkommunikationsstrahls (40) zum optischen Datenempfänger (42) und zum Hindurchlassen des Tageslichts (24) zur Tageslichtkamera (26).

6. Bodenstation nach Anspruch 5, **gekennzeichnet durch** ein optisches Filter (48) zwischen dem ersten Strahlteiler (22) und dem zweiten Strahlteiler (36).

7. Bodenstation nach den Ansprüchen 1 bis 6, **dadurch gekennzeichnet, dass** der Leitstrahl zum Nachführen der Optikeinheit (11) entsprechend der Bewegungsbahn des Satelliten ein Anteil des optischen Datenkommunikationsstrahls (40) ist.

8. Bodenstation nach einem der Ansprüche 1 bis 7, **gekennzeichnet durch** mehrere Beacon-Strahlen, wobei der eine Beacon-Strahl (28) oder jeder der Beacon-Strahlen dezentral durch die Optikeinheit (11) gelangt bzw. gelangen.

9. Bodenstation nach Anspruch 8, **gekennzeichnet durch** ein pyramidenförmiges Element zur Vereinigung mehrerer Beacon-Strahlen (28) in zueinander paralleler Ausrichtung in dem Teleskopstrahl (18).

10. Bodenstation nach einem der Ansprüche 1 bis 9, **gekennzeichnet durch** mindestens einen Uplink-Datenkommunikationsstrahl zur Einkopplung in den Teleskopstrahl (18), wobei der eine oder jeder der Uplink-Datenkommunikationsstrahlen dezentral durch die Optikeinheit (11) gelangt.

11. Bodenstation nach Anspruch 10, **dadurch gekennzeichnet, dass** der mindestens eine Uplink-Datenkommunikationsstrahl moduliert oder pulsmoduliert oder durch Rechteckpulse oder sinusförmig moduliert ist.

12. Bodenstation nach Anspruch 10 oder 11, **dadurch gekennzeichnet, dass** der Uplink-Datenkommunikationsstrahl der oder einer der Beacon-Strahlen (28) ist, oder dass eine separate Quelle zur Erzeugung des Uplink-Datenkommunikationsstrahls in dem Anbaumodul (12) vorhanden ist.

13. Bodenstation nach Anspruch 12, **dadurch gekennzeichnet, dass** der Uplink-Datenkommunikationsstrahl der oder einer der Beacon-Strahlen moduliert ist.

14. Bodenstation für die Analyse eines von einem Satelliten ausgehenden optischen Datenkommunikationsstrahls, mit
- einem Teleskop (10), das ein Gestell (14) und eine beweglich an diesem angeordnete Optikeinheit (11) aufweist, die eine Vorderseite zum Empfangen von Licht und eine Rückseite (16) zum Ausgeben eines aus dem empfangenen Licht gebildeten Teleskopstrahls (18) aufweist, und
- einem Anbaumodul (12) zum Anbringen an der Rückseite (18) der Optikeinheit (11) des Teleskops (10), wobei der Teleskopstrahl (18) in das Anbaumodul (12) gelangt und eine optische Achse (20) des Anbaumoduls (12) definiert,
- wobei das Anbaumodul (12) ein Gehäuse aufweist, in dem folgende Komponenten angeordnet sind:
- ein Lichtmengen-/Lichtleistungssensor(54) zur Erfassung der über den Querschnitt des Teleskopstrahls (18) integrierten örtlichen Lichtintensitäten, und/oder eine Tageslichtkamera zum Empfangen von Tageslicht für die Kalibrierung des Teleskops (10),
- einer Akquisition- und Trackingkamera (60) für den Empfang des von einem Satelliten ausgehenden Datenkommunikationsstrahls zum Nachführen der Optikeinheit (11) des Teleskops (10) entsprechend der Bewegungsbahn des Satelliten und
- einer Pupillenbildkamera (62) zur Erfassung von potenziellen Intensitätsunterschieden des Datenkommunikationsstrahls in Folge von atmosphärischen Störungen des Datenkommunikationsstrahls.

15. Bodenstation nach Anspruch 14, **dadurch gekennzeichnet, dass** die Tageslichtkamera, sofern vorhanden, Licht von Sternen empfängt und/oder dass die potenziellen Intensitätsunterschiede des Datenkommunikationsstrahls Szintillationsmuster und/oder Folgen von Wellenfrontverzerrungen sind.

16. Bodenstation nach Anspruch 15, **dadurch gekennzeichnet, dass** die Komponenten in Richtung des in das Anbaumodul (12) eintretenden Teleskopstrahls (18) betrachtet wie folgt aufeinanderfolgend angeordnet sind:
- ein erster Strahlteiler (52) zum Auskoppeln eines ersten Anteils des Datenkommunikationsstrahls oder des Tageslichts aus dem Teleskopstrahl (18) sowie zum Leiten dieses ersten Anteils des Datenkommunikationsstrahls bzw. zum Leiten des Tageslichts zu dem Lichtmengen/Lichtleistungssensor (54) oder, alternativ, zu der Tageslichtkamera und zum Hindurchlassen des verbleibenden Anteils des Datenkommunikationsstrahls und
- ein zweiter Strahlteiler (58) zum Auskoppel eines zweiten Anteils des Datenkommunikationsstrahls aus dem Teleskopstrahl (18) sowie zum Leiten dieses zweiten Anteils des Datenkommunikationsstrahls zur Akquisition- und Trackingkamera (60) und zum Hindurchlassen des verbleibenden Anteils des Datenkommunikationsstrahls zur Kamera (62).

17. Bodenstation nach Anspruch 16, **dadurch gekennzeichnet, dass** zwischen dem ersten Strahlteiler (52) und dem zweiten Strahlteiler (58) ein Filter (56) zum Filtern von Tageslicht angeordnet ist.

18. Bodenstation nach einem der Ansprüche 16 oder 17, **dadurch gekennzeichnet, dass** in dem Anbaumodul (12) ein weiterer Strahlteiler angeordnet ist, der aus dem Teleskopstrahl (18) das Tageslicht auskoppelt und zur Tageslichtkamera leitet, wobei der erste Strahlteiler den ersten Anteil des Datenkommunikationsstrahls aus dem Teleskopstrahl (18) auskoppelt und zum Lichtmengen/Lichtleistungssensor (54) leitet.

## Claims

1. A ground station for analyzing an optical data communication beam emanating from a satellite, comprising
- a telescope (10) comprising a frame (14) and an optical unit (11) movably disposed thereon, said optical unit comprising a front side for receiving light and a rear side (16) for outputting a telescope beam (18) formed from the received light, and
- an attachment module (12) for being attached to the rear side (18) of the optical unit (11) of the telescope (10), wherein the telescope beam (18) enters the attachment module (12) and defines an optical axis (20) of the attachment module (12),
- wherein the attachment module (12) comprises a housing in which the following components are disposed:
- a daylight camera (26) for receiving light, in particular light from stars, for calibrating the telescope (10),
- an optical data receiver (42) for receiving the optical data communication beam (40),
- a beacon beam source (30) for emitting a beacon beam (28) to a satellite, and
- an acquisition and tracking camera (44) for receiving a guide beam emitted by a satellite for tracking the optical unit (11) in accordance with the trajectory of the satellite,
- wherein along the optical axis (20) of the attachment module (12) beam splitters (22, 36, 38) for coupling out the portions of the telescope beam (18) to be received by the individual components are disposed.

2. The ground station according to claim 1, **characterized in that** the daylight camera receives light from stars.

3. The ground station according to claim 1 or 2, **characterized in that** the components are successively disposed as follows as seen in the direction of the telescope beam (18) entering the attachment module (12):
- a first beam splitter (22) for coupling out daylight as well as for guiding the daylight towards the daylight camera (26) and for letting pass the guide beam and the optical data communication beam (40),
- a second beam splitter (36) for coupling the beacon beam (28) into the telescope beam (18) from the side towards the rear side (16) of the optical unit (11) and for letting pass the guide beam and the optical data communication beam (40), and
- a third beam splitter (38) for coupling out the optical data communication beam (40) as well as for guiding the optical data communication beam (40) to the optical data receiver (42) and for letting pass the guide beam to the acquisition and tracking camera (44).

4. The ground station according to claim 3, **characterized by** a first optical filter (48) between the second beam splitter (36) and the third beam splitter (38) and a second optical filter (50) between the third beam splitter (38) and the acquisition and tracking camera (44).

5. The ground station according to claim 1 or 2, **characterized in that** the components are successively disposed as follows as seen in the direction of the telescope beam (18) entering the attachment module (12):
- a first beam splitter (22) for coupling the beacon beam (28) into the telescope beam (18) from the side towards the rear side (16) of the optical unit (11) and for letting pass the guide beam, the daylight (24) and the optical data communication beam (40),
- a second beam splitter (36) for coupling out the guide beam as well as for guiding the guide beam to the acquisition and tracking camera (44) and for letting pass the daylight (24) and the optical data communication beam (40), and
- a third beam splitter (38) for coupling out the optical data communication beam (40) as well as for guiding the optical data communication beam (40) to the optical data receiver (42) and for letting pass the daylight (24) to the daylight camera (26).

6. The ground station according to claim 5, **characterized by** an optical filter (48) between the first beam splitter (22) and the second beam splitter (36).

7. The ground station according to claims 1 to 6, **characterized in that** the light beam for tracking the optical unit (11) in accordance with the trajectory of the satellite is a portion of the optical data communication beam (40).

8. The ground station according to any one of claims 1 to 7, **characterized by** a plurality of beacon beams, wherein the one beacon beam (28) or each beacon beam travels through the optical unit (11) in a decentralized manner.

9. The ground station according to claim 8, **characterized by** a pyramidal element for uniting a plurality of beacon beams (28) in a parallel alignment to each other in the telescope beam (18).

10. The ground station according to any one of claims 1 to 9, **characterized by** at least one uplink data communication beam for coupling into the telescope beam (18), wherein the one or each uplink data communication beam travels through the optical unit (11) in a decentralized manner.

11. The ground station according to claim 10, **characterized in that** the at least one uplink data communication beam is modulated or pulse-modulated or modulated by rectangular pulses or sinusoidally.

12. The ground station according to claim 10 or 11, **characterized in that** the uplink data communication beam is the one or of one of the beacon beams (28), or that a separate source for generating the uplink data communication beam exists in the attachment module (12).

13. The ground station according to claim 12, **characterized in that** the uplink data communication beam of the or one of the beacon beams is modulated.

14. The ground station for analyzing an optical data communication beam emanating from a satellite, comprising
- a telescope (10) comprising a frame (14) and an optical unit (11) movably disposed thereon, said optical unit comprising a front side for receiving light and a rear side (16) for outputting a telescope beam (18) formed from the received light, and
- an attachment module (12) for being attached to the rear side (18) of the optical unit (11) of the telescope (10), wherein the telescope beam (18) enters the attachment module (12) and defines an optical axis (20) of the attachment module (12),
- wherein the attachment module (12) comprises a housing in which the following components are disposed:
- a light quantity/light power sensor (54) for sensing the local light intensities integrated across the cross-section of the telescope beam (18), and/or a daylight camera for receiving daylight for calibrating the telescope (10),
- an acquisition and tracking camera (60) for receiving the data communication beam emanating from a satellite for tracking the optical unit (11) of the telescope (10) in accordance with the trajectory of the satellite, and
- a pupil image camera (62) for acquiring potential intensity differences of the data communication beam attributable to atmospheric interferences suffered by the data communication beam.

15. The ground station according to claim 14, **characterized in that** the daylight camera, if provided, receives light from stars, and/or that the potential intensity differences of the data communication beam are scintillation patterns and/or consequences of wavefront distortions.

16. The ground station according to claim 15, **characterized in that** the components are successively disposed as follows as seen in the direction of the telescope beam (18) entering the attachment module (12):
- a first beam splitter (52) for coupling a first portion of the data communication beam or the daylight out of the telescope beam (18) and for guiding this first portion of the data communication beam and for guiding the daylight towards the light quantity/light power sensor (54), respectively, or, alternatively, to the daylight camera and for letting pass the remaining portion of the optical data communication beam, and
- a second beam splitter (58) for coupling a second portion of the data communication beam out of the telescope beam (18) as well as for guiding this second portion of the data communication beam to the acquisition and tracking camera (60) and for letting pass the remaining portion of the data communication beam to the camera (62).

17. The ground station according to claim 16, **characterized in that** between the first beam splitter (52) and the second beam splitter (58) a filter (56) for filtering daylight is disposed.

18. The ground station according to any one of claims 16 or 17, **characterized in that** in the attachment module (12) another beam splitter is disposed which couples the daylight out of the telescope beam (18) and guides it to the daylight camera, wherein the first beam splitter couples the first portion of the data communication beams out of the telescope beam (18) and guides it to the light quantity/light power sensor (54).

## Revendications

1. Station terrestre pour l'analyse d'un faisceau optique de communication de données émanant d'un satellite, dotée
- d'un télescope (10), lequel comporte un bâti (14) et une unité optique (11) disposée de manière mobile sur celui-ci, laquelle possède une face avant destinée à recevoir la lumière et une face arrière (16) destinée à émettre un faisceau de télescope (18) formé à partir de la lumière reçue, et
- d'un module rapporté (12) destiné à être monté sur la face arrière (18) de l'unité optique (11) du télescope (10), dans laquelle le faisceau du télescope (18) pénètre dans le module rapporté (12) et définit un axe optique (20) du module rapporté (12),
- dans laquelle le module rapporté (12) comporte un boîtier à l'intérieur duquel sont disposés les composants suivants :
- une caméra à lumière du jour (26) destinée à recevoir de la lumière, notamment de la lumière des étoiles, pour calibrer le télescope (10),
- un récepteur optique de données (42) destiné à recevoir le faisceau optique de communication de données (40),
- une source de faisceau de balise (30) destinée à émettre un faisceau de balise (28) vers un satellite et
- une caméra d'acquisition et de poursuite (44) destinée à recevoir un faisceau de guidage émis par un satellite pour l'asservissement de l'unité optique (11) en fonction de la trajectoire du satellite,
- dans laquelle des séparateurs de faisceau (22, 36, 38) sont disposés le long de l'axe optique (20) du module rapporté (12) pour découpler les composantes du faisceau de télescope (18) que les composants individuels doivent recevoir.

2. Station terrestre selon la revendication 1, **caractérisée en ce que** la caméra à lumière du jour reçoit de la lumière des étoiles.

3. Station terrestre selon la revendication 1 ou 2, **caractérisée en ce que** les composants sont disposés l'un après l'autre, vu dans la direction du faisceau de télescope (18) entrant dans le module rapporté (12), comme suit :
- un premier séparateur de faisceau (22) destiné à découpler la lumière du jour et à guider la lumière du jour en direction de la caméra à lumière du jour (26) et à laisser passer le faisceau de guidage et le faisceau optique de communication de données (40),
- un deuxième séparateur de faisceau (36) destiné à coupler le faisceau de balise (28) depuis le côté dans le faisceau de télescope (18) en direction de la face arrière (16) de l'unité optique (11) et à laisser passer le faisceau de guidage et le faisceau optique de communication de données (40) et
- un troisième séparateur de faisceau (38) destiné à découpler le faisceau optique de communication de données (40) et à guider le faisceau optique de communication de données (40) jusqu'au récepteur optique de données (42) et à laisser passer le faisceau de guidage vers la caméra d'acquisition et de poursuite (44).

4. Station terrestre selon la revendication 3, **caractérisée par** un premier filtre optique (48) entre le deuxième séparateur de faisceau (36) et le troisième séparateur de faisceau (38) et un deuxième filtre optique (50) entre le troisième séparateur de faisceau (38) et la caméra d'acquisition et de poursuite (44).

5. Station terrestre selon la revendication 1 ou 2, **caractérisée en ce que** les composants sont disposés l'un après l'autre, vu dans la direction du faisceau de télescope (18) entrant dans le module rapporté (12), comme suit :
- un premier séparateur de faisceau (22) destiné à coupler le faisceau de balise (28) depuis le côté dans le faisceau de télescope (18) en direction de la face arrière (16) de l'unité optique (11) et à laisser passer le faisceau de guidage, la lumière du jour (24) et le faisceau optique de communication de données (40),
- un deuxième séparateur de faisceau (36) destiné à découpler le faisceau de guidage et à guider le faisceau de guidage en direction de la caméra d'acquisition et de poursuite (44) et à laisser passer la lumière du jour (24) et le faisceau optique de communication de données (40) et
- un troisième séparateur de faisceau (38) destiné à découpler le faisceau optique de communication de données (40) et à guider le faisceau optique de communication de données (40) jusqu'au récepteur optique de données (42) et à laisser passer la lumière du jour (24) vers la caméra à lumière du jour (26).

6. Station terrestre selon la revendication 5, **caractérisée par** un filtre optique (48) entre le premier séparateur de faisceau (22) et le deuxième séparateur de faisceau (36).

7. Station terrestre selon l'une des revendications 1 à 6, **caractérisée en ce que** le faisceau de guidage destiné à l'asservissement de l'unité optique (11) en fonction de la trajectoire du satellite est une composante du faisceau optique de communication de données (40).

8. Station terrestre selon l'une des revendications 1 à 7, **caractérisée par** plusieurs faisceaux de balise, dans laquelle le faisceau de balise (28) ou chacun des faisceaux de balise passe(nt) à travers l'unité optique (11) de manière décentralisée.

9. Station terrestre selon la revendication 8, **caractérisée par** un élément de forme pyramidale destiné à réunir plusieurs faisceaux de balise (28), orientés parallèlement l'un à l'autre dans le faisceau de télescope (18).

10. Station terrestre selon l'une des revendications 1 à 9, **caractérisée par** au moins un faisceau montant de communication de données destiné au couplage dans le faisceau de télescope (18), dans laquelle le faisceau montant ou chacun des faisceaux montants de communication de données passe(nt) à travers l'unité optique (11) de manière décentralisée.

11. Station terrestre selon la revendication 10, **caractérisé en ce que** l'au moins un faisceau montant de communication de données est modulé ou modulé en impulsions ou modulé par impulsions carrées ou modulé de manière sinusoïdale.

12. Station terrestre selon la revendication 10 ou 11, **caractérisée en ce que** le faisceau montant de communication de données est le faisceau de balise ou l'un des faisceaux de balise (28), ou **en ce qu'**une source séparée est présente pour générer le faisceau montant de communication de données dans le module rapporté (12).

13. Station terrestre selon la revendication 12, **caractérisée en ce que** le faisceau montant de communication de données est modulé par le faisceau de balise ou l'un des faisceaux de balise.

14. Station terrestre pour l'analyse d'un faisceau optique de communication de données émanant d'un satellite, dotée
- d'un télescope (10), lequel comporte un bâti (14) et une unité optique (11) disposée de manière mobile sur celui-ci, laquelle possède une face avant destinée à recevoir la lumière et une face arrière (16) destinée à émettre un faisceau de télescope (18) formé à partir de la lumière reçue, et
- d'un module rapporté (12) destiné à être monté sur la face arrière (18) de l'unité optique (11) du télescope (10), dans laquelle le faisceau du télescope (18) pénètre dans le module rapporté (12) et définit un axe optique (20) du module rapporté (12),
- dans laquelle le module rapporté (12) comporte un boîtier à l'intérieur duquel sont disposés les composants suivants :
- un capteur de luminosité (54) destiné à saisir les intensités lumineuses locales intégrées sur la section transversale du faisceau de télescope (18), et/ou une caméra à lumière du jour destinée à recevoir de la lumière du jour pour calibrer le télescope (10),
- une caméra d'acquisition et de poursuite (60) destinée à recevoir le faisceau de communication de données émis par un satellite pour l'asservissement de l'unité optique (11) du télescope (10) en fonction de la trajectoire du satellite et
- une caméra à pupille (62) destinée à saisir des différences potentielles d'intensité du faisceau de communication de données à la suite de perturbations atmosphériques du faisceau de communication de données.

15. Station terrestre selon la revendication 14, **caractérisée en ce que** la caméra à lumière du jour, pour autant qu'elle soit présente, reçoit de la lumière des étoiles et/ou **en ce que** les différences potentielles d'intensité du faisceau de communication de données sont des motifs de scintillement et/ou des séries de déformations de front d'onde.

16. Station terrestre selon la revendication 15, **caractérisée en ce que** les composants sont disposés l'un après l'autre, vu dans la direction du faisceau de télescope (18) entrant dans le module rapporté (12), comme suit :
- un premier séparateur de faisceau (52) destiné à découpler du faisceau de télescope (18) une première composante du faisceau de communication de données ou la lumière du jour et à guider cette première composante du faisceau de communication de données ou à guider la lumière du jour au capteur de luminosité (54) ou, alternativement, à la caméra à lumière du jour et à laisser passer la composante restante du faisceau de communication de données et
- un deuxième séparateur de faisceau (58) destiné à découpler du faisceau de télescope (18) une deuxième composante du faisceau de communication de données et à guider cette deuxième composante du faisceau de communication de données vers la caméra d'acquisition et de poursuite (60) et à laisser passer la composante restante du faisceau de communication de données vers la caméra (62).

17. Station terrestre selon la revendication 16, **caractérisée en ce qu'**un filtre (56) destiné à filtrer la lumière du jour est disposé entre le premier séparateur de faisceau (52) et le deuxième séparateur de faisceau (58).

18. Station terrestre selon l'une des revendications 16 ou 17, **caractérisée en ce qu'**un séparateur de faisceau supplémentaire, lequel découple du faisceau de télescope (18) la lumière du jour et la guide vers la caméra à lumière du jour, est disposé dans le module rapporté (12), dans laquelle le premier séparateur de faisceau découple du faisceau de télescope (18) la première composante du faisceau de communication de données et la guide vers le capteur de luminosité (54).
